# EUROPEAN PATENT APPLICATION

(11) **EP 4 737 815 A1**
(43) Date of publication of application: **06.05.2026**
(21) Application number: 25464001.4
(22) Date of filing: 20.05.2025
(51) Int. Cl.: F24S 20/50, F24S 40/52, F24S 50/40, F24S 50/80, F24S 60/10, F24S 70/10, F24S 40/10, F24S 20/40, F24S 20/00

(54) **HYBRID SOLAR SYSTEM WITH AUTOMATIC ADJUSTMENT**

(30) Priority: 30.10.2024 RO 202400649
(71) Applicant: Stefan cel Mare University of Suceava, 720229 Suceava, County Suceava (RO)
(72) Inventor: IFRIM, Visarion-Catalin, Suceava, SV (RO); BEJENAR, Ciprian, Suceava, SV (RO); UNGUREANU, Constantin, Suceava, SV (RO); IMILICI, Laurentiu-Dan, Lisaura, Ipotesti (RO); ATANASOAE, Pavel, Suceava, SV (RO)

(57) **Abstract**

***Summary:*** Hybrid solar system with automatic adjustment, according to the invention, it consists of a collector for solar conversion, which ensures the selective production of electrical energy and thermal energy, whose constructive form is adaptive in an automatically way, depending on the season or the outside temperature, by means of actuators made of shape memory alloys, which facilitate the shape modification of the assembly autonomously and the different exposure to the sun, action dependent on changes in ambient temperature.

The summary of the invention will be published together with figure 1.

## Description

The invention relates to a hybrid solar system with automatic adjustment for the conversion of solar energy, both for the production of electrical energy, as well for the supply of thermal energy, concomitantly with the autonomous modification of the shape, due to the distinct equipment using a thermo-mechanical drive.

In the purpose of realization of some solar systems, several solutions are known (JP3594805B2, CN201909387U, US2012024283A1) which consists, mainly, of bifacial solar systems for power supply, solar systems for air heating, or hybrid solar systems, with functionalities limited by their construction and developed for use with limited purpose.

Some of the disadvantages of the described solutions are related to that, the systems in which are included the bifacial solar panels for power supply do not allow the alternating use of both sides exposed to solar radiation, the systems in which are included solar panels for air heating are exposed to solar radiation during the warm season, while they are exposed to overheating, and the hybrid solar systems have a construction whose destination cannot be dynamically changed, after they have already been built.

The invention solves, mainly, the technical problems in that, the collector proposed for solar conversion ensures the selective production of electrical energy and thermal energy, whose constructive form is adaptive in an automatically way, to the alternation of seasons, by means of actuators made of alloys with shape memory, which facilitate the destination modification of the assembly autonomously, action dependent on changes in ambient temperature.

Hybrid solar system with automatic adjustment, according to the invention, it surprises the presented disadvantages and problems, in that it assumes, mainly, an assembly consisting of solar panels intended for the production of electricity and heat, joined through thermo-mechanical actuators and elastic parts, which is why, the system supports the adaptive modification of the shape and operating regime, without external intervention, so that, in summer the production of electrical energy is facilitated, in winter the production of thermal energy is facilitated, and in spring and autumn it allows the simultaneous production of electricity and heat.

The invention has the following advantages:
- The system introduces new possibilities for the hybrid production of electricity and/or heat, respectively, for adjusting the operating regime of solar systems, due to the nature of its dynamic construction;
- The system covers the various needs of supplying electricity and/or heating, through its constructive form;
- The system alternately exploits the solar panels intended for the production of electrical energy;
- The system avoids overheating of solar panels intended for the production of thermal energy;
- The system is driven automatically, and the control process is autonomous, which does not require additional energy;
- The system features actuation elements that do not require special maintenance.

Below is further given an embodiment of the invention in connection with the following figures:

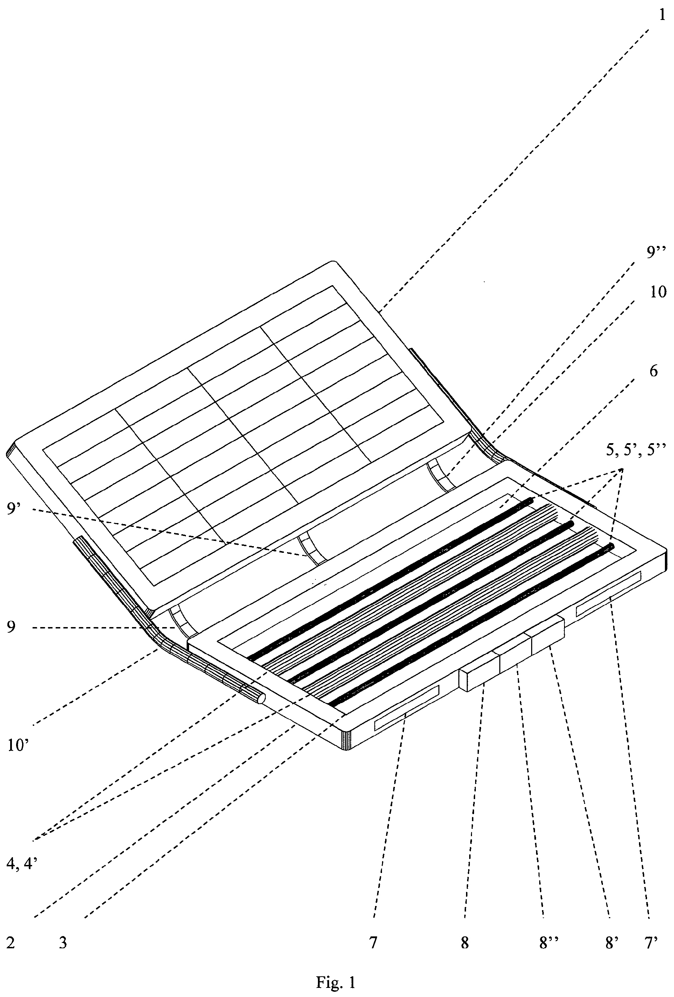

- Fig. 1 - Hybrid solar system with automatic adjustment, perspective view;

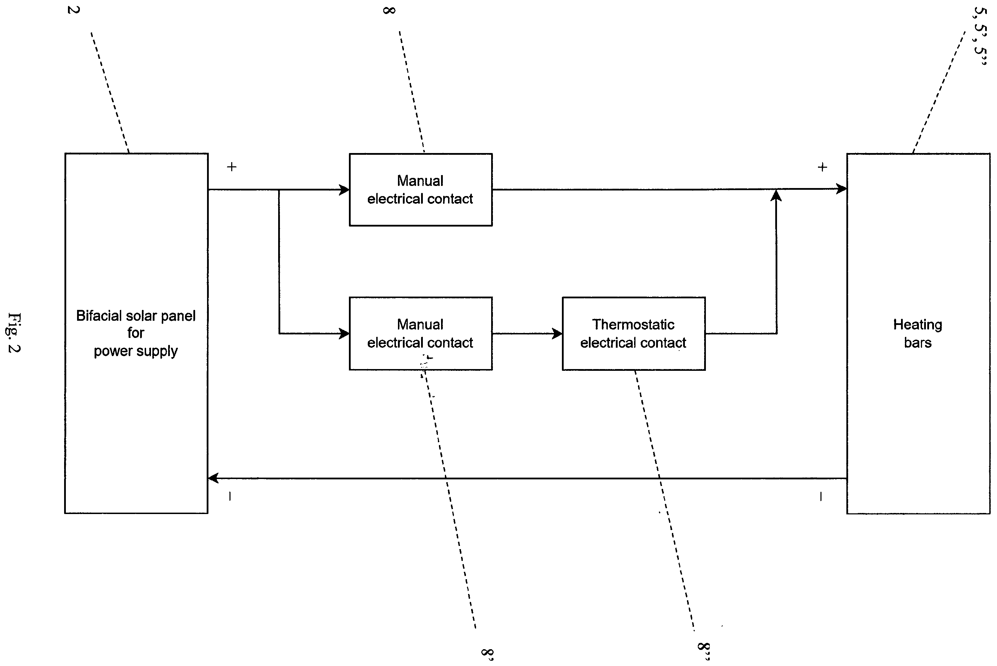

- Fig. 2 - General diagram of internal electrical connections, corresponding to the hybrid solar system with automatic adjustment.

Hybrid solar system with automatic adjustment is characterized mainly, in that its construction is in the form of two articulated panels, such as the covers of a book, with different constructive elements and characteristics of photovoltaic-thermal assemblies, so that one half is made up of a bifacial photovoltaic solar panel 1, for the conversion of solar energy into electrical energy, which has photovoltaic cells on each side, and another half consists of a solar panel for air/water heating 2, for converting solar energy into thermal energy, which disposes of a closed accumulator cavity 3, of black color, through which circulates air/water and is provided with paraffin accumulator bars 4, 4', heating bars 5, 5', 5", with electrical resistances powered from photovoltaic panel 1, all exposed to solar radiation penetrating through the transparent upper wall 6, cavity also provided with air/water circulation vents 7, 7', on the outside of which is the manual electrical contact 8, in *normally open* position, parallel to the manual electrical contact 8', in *normally open* position, in series with the thermostatic electrical contact 8", in *normally open* position at a high temperature greater than or equal to 10 °C (*T* ≥ *10 °C),* arranged at the edge of the panel, facing the environment and exposed to ambient temperature (*Tₐ*), in electrical connection and intermediate between the bifacial solar panel for power supply 1, and the heating bars 5, 5', 5", and at the same time, panel 1, and panel 2, make up a whole, being joined with the elastic parts 9, 9', 9", identical and in a semicircle normally shape, resistant and with the actuation rods 10, 10', made of shape memory alloy (nickel-titanium alloy [NiTi], called nitinol), hot activated, identical and in a memorized shape of a horseshoe at a high temperature greater than or equal to 18 °C (*T* ≥ *18 °C*)*,* unfolded and rigidly fixed to the outer edges of the system they compose.

Hybrid solar system with automatic adjustment, is positioned so that it is exposed to the sun's rays for as long as possible during a day and when the ambient temperature is greater than or equal to 18 °C (*Ta* ≥ *18 °C*)*,* the actuation rods 10, 10', are in an *active state,* in the shape of a horseshoe, which is why the bifacial photovoltaic solar panel 1, covers the solar panel for air/water heating 2, closed book type, protecting it from solar radiation due to the thermo-mechanical actuation of the rods 10, 10', and on the other hand that, when the ambient temperature is lower than 18 °C (*Tₐ* < *18 °C),* the actuation rods 10, 10', are in an *inactive state,* in a straight shape, which is why photovoltaic panel 1, uncovers the solar panel for air/water heating 2, exposing it to solar radiation due to the reaction of the elastic parts 9, 9', 9", at the same time with the fact that, if in addition, the manual electrical contact 8', is in *closed position* and the ambient temperature is less than 10 °C (*Tₐ < 10 °C),* the thermostatic electrical contact 8", is switched to *closed* position, and the bifacial solar panel for power supply 1, power supplies the heating bars 5, 5', 5", that thermally dissipates the electrical energy produced, in the closed accumulator cavity 3, to increase the thermal energy production capacity of the system, while the surplus is stored in the accumulator bars 4, 4'.

Hybrid solar system with automatic adjustment, according to the invention, can be reproduced with the same performances and characteristics whenever is necessary, for any application compatible with it or parts thereof, a fact that constitutes an argument in favor of meeting the criterion of industrial applicability.

## Claims

1. Hybrid solar system with automatic adjustment, consisting of two articulated panels, each with different construction elements, so that one half is made up of a bifacial photovoltaic solar panel (1), for the conversion of solar energy into electrical energy, which has photovoltaic cells on each side, and another half consists of a solar panel for air/water heating (2), for the conversion of solar energy into thermal energy, which disposes of a closed accumulator cavity (3), of black color, through which circulates air/water and is provided with paraffin accumulator bars (4), (4'), heating bars (5), (5'), (5"), with electrical resistances powered from photovoltaic panel (1), all exposed to solar radiation penetrating through the transparent upper wall (6), cavity also provided with air/water circulation vents (7), (7'), on the outside of which is the manual electrical contact (8), in the *normally open* position, positioned in parallel to the manual electrical contact (8'), in *normally open* position, in series with the thermostatic electrical contact (8"), in *normally open* position at a high temperature greater than or equal to *T* ≥ *10 °C,* arranged at the edge of the panel, and exposed to ambient temperature, in electrical connection and intermediate between the bifacial solar panel for power supply (1), and the heating bars (5), (5'), (5"), and the panel (1) and the panel (2), make up a whole, being joined with the elastic parts (9), (9"), (9") and with the actuation rods (10), (10'), made of shape memory alloy, in a memorized shape of a horseshoe at a high temperature greater than or equal to *T* ≥ *18 °C.*

2. Hybrid solar system with automatic adjustment, according to claim 1, **characterized in that**, when the ambient temperature is greater than or equal to *Tₐ* ≥ *18 °C,* the actuation rods (10), (10'), are in an *active state* and a shape of horseshoe, which is why the bifacial photovoltaic solar panel (1), covers the solar panel for air/water heating (2), protecting it from solar radiation due to the thermo-mechanical actuation of the rods (10), (10'), a case where only electrical energy is produced.

3. Hybrid solar system with automatic adjustment, according to claim 1 and claim 2, **characterized in that**, when the ambient temperature is lower than *Tₐ < 18 °C,* the actuation rods (10), (10'), are in an *inactive state* and a straight shape, which is why the photovoltaic panel (1), uncovers the solar panel for air/water heating (2), exposing it to solar radiation due to the reaction of the elastic parts (9), (9'), at the same time with the fact that, if in addition, the manual electrical contact (8'), is in the *closed position* and the ambient temperature is less than *Tₐ < 10 °C,* the thermostatic electrical contact (8"), is switched to the *closed position,* and the bifacial solar panel for power supply (1), power supplies the heating bars (5), (5'), (5"), that thermally dissipates the electrical energy produced, in the closed accumulator cavity (3), to increase the thermal energy production capacity of the system, while the surplus is stored in the accumulator bars (4), (4').
